# EUROPEAN PATENT APPLICATION

(11) **EP 4 790 794 A1**
(43) Date of publication of application: **12.08.2026**
(21) Application number: 25861726.5
(22) Date of filing: 21.04.2025
(51) Int. Cl.: H01M 10/613, H01M 10/615

(54) **THERMAL MANAGEMENT APPARATUS AND BATTERY PACK**

(30) Priority: 10.12.2024 CN 202423054337 U
(71) Applicant: Eve Energy Co., Ltd, Huizhou, Guangdong 516006 (CN)
(72) Inventor: HUANG, Liansheng, Huizhou, Guangdong 516006 (CN); YAN, Shiwei, Huizhou, Guangdong 516006 (CN); LI, Xingyao, Huizhou, Guangdong 516006 (CN)
(74) Representative: Zhu, Puxing
(86) International application number: PCT/CN2025/090124
(87) International publication number: WO 2026/123530

(57) **Abstract**

Provided are a thermal management device and a battery pack. The thermal management device includes one or more support members and one or more heating films. Each support member is configured to cool a corresponding battery cell row. Each heating film is configured to heat a corresponding battery cell row. Each heating film is connected to a corresponding support member. The heating film is shaped to adapt to the support member so as to ensure a stable contact between the heating film and the support member.

## Description

This application claims priority to Chinese Patent Application No. 202423054337.9, filed on December 10, 2024 with the China National Intellectual Property Administration, the entire contents of which are incorporated herein by reference.

### Technical Field

The present invention relates to the technical field of power batteries, and specifically relates to a thermal management device and a battery pack.

### Background

In the related art, typical thermal management systems primarily employ air cooling and liquid cooling methods to regulate the temperature of batteries, thereby ensuring proper system operation. However, air cooling typically provides limited cooling performance, while liquid cooling structures are often complex. Compared with typical direct cooling designs, heating films are relatively flexible and are commonly disposed on a base plate to heat the bottom surfaces of battery cells. However, the bottom surface of each battery cell has a relatively small area, resulting in a limited heating area between the heating films and the battery cells, which in turn reduces heating efficiency.

### Summary

Therefore, the thermal management device in the related art has the technical problem of a small heating area between the heating films and the battery cells.

Some embodiments of the present invention provide a thermal management device and a battery pack, which can improve the technical problem of the thermal management device in the related art having a small heating area between the heating films and the battery cells.

In a first aspect, some embodiments of the present invention provide a thermal management device. The thermal management device is applicable to a battery pack. The battery pack includes one or more battery cell groups, each battery cell group including one or more battery cell rows, and each battery cell row including multiple battery cells. The thermal management device includes:

In a second aspect, some embodiments of the present invention provide a battery pack. The battery pack includes the thermal management device as in any of the above embodiments.

### Advantages

In the embodiments of the present invention, the heating film is connected to a respective support member, and the heating film is shaped to adapt to the support member. In this way, it ensures that the heating film is in stable contact with the serpentine tube, thus alleviating the technical problem of the thermal management device in the related art in which the heating area between the heating films and the battery cells is small.

### Brief Description of the Drawings

In order to more clearly illustrate the technical solutions in the embodiments of the present application, the accompanying drawings to be used in combination with the description of the embodiments will be briefly introduced below. It is apparent that the drawings in the following description only correspond to some embodiments of the present application, and other drawings can be obtained according to these drawings by the person skilled in the field without paying creative labor.
FIG. 1 is a schematic structural diagram of a thermal management device according to some embodiments of the present application.
FIG. 2 is a schematic structural diagram of a thermal management device and a battery cell group according to some embodiments of the present application.
FIG. 3 is a schematic structural diagram of one support member and two heating films in a thermal management device according to some embodiments of the present application.
FIG. 4 is an exploded view of one support member and two heating films in a thermal management device according to some embodiments of the present application.
FIG. 5 is a schematic structural diagram of a battery pack according to some embodiments of the present application.
FIG. 6 is an exploded view of a battery pack according to some embodiments of the present application.

### Detailed Description

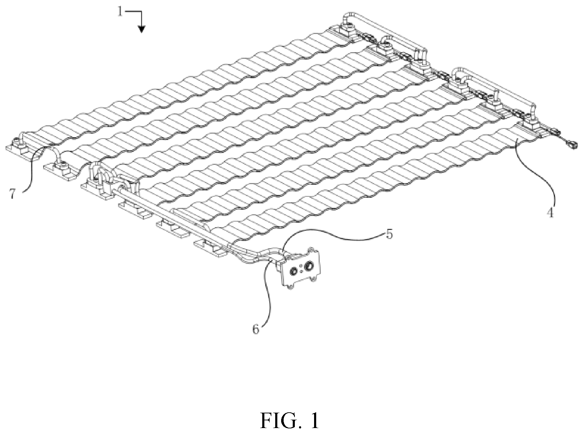

Referring to FIG. 1, FIG. 2, FIG. 3, and FIG. 4, some embodiments of the present application provide a thermal management device 1 which is used for a battery pack 8. The battery pack 8 includes at least one battery cell group 2. Each battery cell group 2 includes at least one battery cell row. Each battery cell row includes multiple battery cells 21. The thermal management device 1 includes at least one support member 3 and at least one heating film 4, each support member 3 is configured to cool a corresponding battery cell row, and each heating film 4 is configured to heat the corresponding battery cell row. Each heating film 4 is connected to one support member 3, and the heating film 4 has a shape adapted to the shape of the support member 3.

In the embodiments, the heating film 4 is connected to the support member 3, and the shape of the heating film 4 is adapted to the shape of the support member 3. In this way, it ensures that the heating film 4 is in stable contact with the serpentine tube, thus alleviating the technical problem of the thermal management device 1 in the related art in which the heating film 4 cannot be in stable contact with the support member 3.

It should be noted that the support member described in the present application may be implemented as a direct-cooling tube. The direct-cooling tube utilizes refrigerant-based direct-cooling technology, where the refrigerant undergoes phase transitions via a condenser, compressor, and evaporator, thereby directly participating in the cooling of the battery cells.

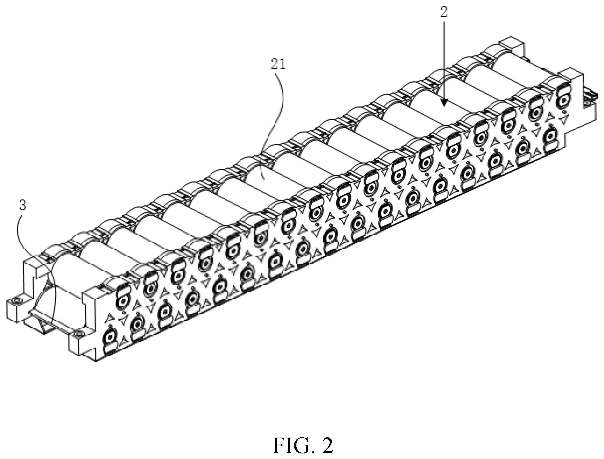

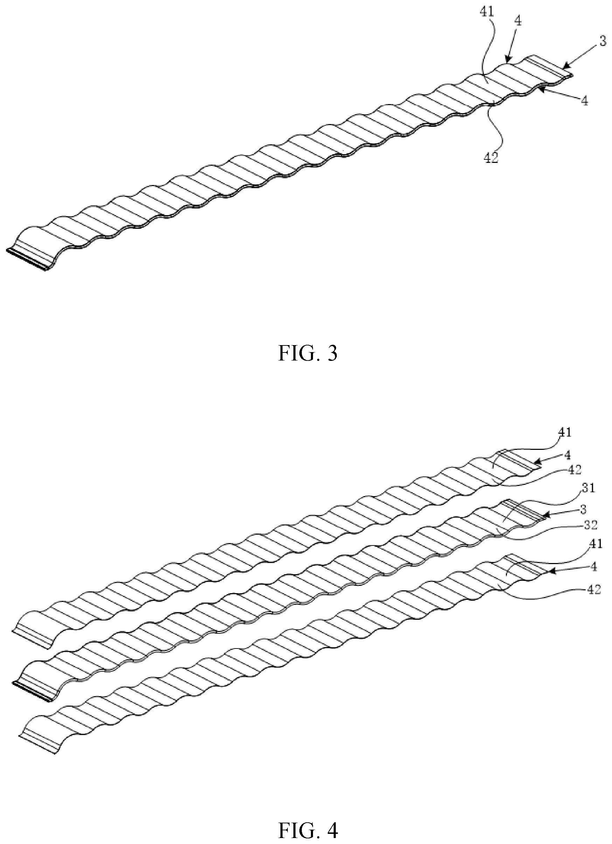

In some embodiments, referring to FIGS. 2 and 3, the thermal management device 1 includes two heating films 4. Each battery cell group 2 includes two battery cell rows stacked along the thickness direction of the battery pack 8. The two heating films 4 are disposed on two sides of the support member 3 respectively, and are in close contact with the two battery cell rows respectively.

It is to be understood that one support member 3 and two heating films 4 disposed on two sides of the support member 3 are all located between two adjacent battery cell rows, and each of the two heating films 4 is in contact with the battery cell row on the side close to the heating film 4. In this way, the heating films 4 contact the battery cell rows respectively, realizing heat exchange.

In the embodiments, the heat exchange efficiency of the heating films 4 can be improved by the heating films 4 being respectively provided on two sides of the support member 3 and contacting the corresponding battery cell rows.

In some embodiments, referring to FIG. 4, each heating film 4 includes multiple heating convex portions 41 and multiple heating concave portions 42. Each support member 3 includes multiple direct-cooling convex portions 31 and multiple direct-cooling concave portions 32. The heating convex portions 41 of one heating film 4 are in close contact with the direct-cooling convex portions 31 and with one battery cell row, and are positioned between the direct-cooling convex portions 31 and the battery cell row; the heating concave portions 42 of another heating film 4 are in close contact with the direct-cooling concave portions 32 and with another battery cell row, and are positioned between the direct-cooling concave portions 32 and the another battery cell row.

The two heating films 4 are bonded to the same support member 3. The heating convex portions 41 of one of the two heating films 4 are disposed opposite the heating convex portions 41 of the other heating film 4, and the heating concave portions 42 of one of the two heating films 4 are disposed opposite the heating concave portions 42 of the other heating film 4.

It is to be understood that by providing the heating films 4 with multiple periodically arranged heating convex portions 41 and heating concave portions 42, the shape of the heating films 4 is adapted to the shape of the support members 3, enabling the heating films 4 to be better in stable contact with the support members 3.

In some embodiment, one heating film 4 of the two heating films 4 includes heating wires, and the distribution of the heating wires over at least one heating convex portion 41 is denser than the distribution of the heating wires over at least one heating concave portion 42.

The one heating film 4 corresponds to a respective battery cell row, and battery cells 21 of the battery cell row are disposed opposite the heating convex portions 41 of the one heating film 4.

It is to be understood that the heating wires of greater density are provided at the heating convex portions 41 corresponding to the battery cells 21, and thus the heating wires of greater density are utilized to exchange heat with the corresponding battery cells 21, so that the heat exchange between the heating film 4 and the corresponding battery cells 21 is more efficient.

It is to be noted that the heating wires with greater density can result in greater heating power delivered to the corresponding battery cells 21.

In some embodiment, the other heating film 4 of the two heating films 4 includes heating wires, and the distribution of the heating wires over at least one heating concave portion 42 is denser than the distribution of the heating wires over at least one heating convex portion 41.

The other heating film 4 corresponds to a respective battery cell row, and battery cells 21 of the battery cell row are disposed opposite the heating concave portions 42 of the other heating film 4.

It is to be understood that the heating wires of greater density are provided at the heating concave portions 42 corresponding to the battery cells 21, and thus the heating wires of greater density are utilized to exchange heat with the corresponding battery cells 21, so that the heat exchange between the other heating film 4 and the corresponding battery cells 21 is more efficient.

In some embodiments, the power of each heating wire ranges from 4 watts to 10 watts.

The power of each heating wire may be one of 4 watts, 6 watts, 8 watts, or 10 watts.

It is to be understood that when the power of each heating wire is lower than 4 watts or the power of each heating wire is higher than 10 watts, the process is relatively difficult to be realized, making the cost higher. The power of each heating wire in the range of 4 watts to 10 watts not only reduces the cost, but also makes the heat exchange between the heating film 4 and the corresponding battery cells 21 highly efficient.

In some embodiment, a fluid inlet tube 5, a fluid outlet tube 6, and one or more connection tubes 7 are further provided. The fluid inlet tube 5 is connected to a respective support member 3, the fluid outlet tube 6 is connected to a respective another support member 3, and a respective connection tube 7 is connected to two adjacent support members 3.

The fluid inlet tube 5 is in communication with the support member 3, adjacent support members 3 are in communication with each other via a respective connection tube 7, and the fluid outlet tube 6 is in communication with the other support member 3. The fluid inlet tube 5 and the fluid outlet tube 6 are in communication with a circulation storage section, thereby forming a continuous flow loop.

It is to be understood that the circulation storage section contains a refrigerant, and the refrigerant flows into one support member 3 through the fluid inlet tube 5, so that the support member 3 realizes a direct heat exchange with the battery cells 21. Then, the refrigerant continues to be carried through the connection tubes 7 to the adjacent support members 3, so as to cool each battery cell row, and finally flows back to the circulation storage section through the fluid outlet tube 6 from the support member 3 connected to the fluid outlet tube 6, so as to realize the circulating loop of the refrigerant in order to improve the heat exchange efficiency of the support members 3 for the battery cell groups 2.

In some embodiments, the diameter of the fluid inlet tube 5 is smaller than the diameter of the fluid outlet tube 6.

It is understood that since the refrigerant in the fluid inlet tube 5 is in a liquid state and the refrigerant in the fluid outlet tube 6 is in a gaseous state, the fluid outlet tube 6 is provided with a larger tube diameter to transmit the refrigerant in a gaseous state to ensure the consistency of the refrigerant pressure in the fluid inlet tube 5 and the fluid outlet tube 6, and to avoid bursting or leaking due to the excessive refrigerant pressure.

In some embodiments, the diameter of each connection tube 7 ranges from 4 mm to 5 mm.

The diameter of each connection tube 7 may be any of 4 mm, 4.5 mm, or 5 mm.

In some embodiments, the refrigerant may be R134a.

It will be appreciated that the temperature of cold plates is lowered by heat absorption of the refrigerant within refrigerant tubs, which in turn lowers the temperature of the battery cells 21 that are thermally conductively connected to the cold plates.

In some embodiment, the fluid inlet tube 5, the fluid outlet tube 6, the connection tubes 7, and the support members 3 have a burst pressure resistance value in the range of 10 MPa to 15 MPa.

The burst pressure resistance value of the fluid inlet tube 5, the fluid outlet tube 6, the connection tubes 7, and the support members 3 may be any of 10 MPa, 12 MPa, 13 MPa, or 15 MPa.

It is understandable that the higher the burst pressure resistance value of the fluid inlet tube 5, fluid outlet tube 6, connection tubes 7, and support members 3, the better the stability of the fluid inlet tube 5, fluid outlet tube 6, connection tubes 7, and support members 3, thereby preventing abnormal conditions such as tube bursts caused by excessive refrigerant pressure.

It is to be understood that the burst pressure resistance value refers to the value of the pressure provided by a refrigerant that each of the welds between the fluid inlet tube 5, fluid outlet tube 6, connection tubes 7, and supporting members 3 is able to withstand. Since the welds are more susceptible to leakage due to the pressure of the refrigerant as compared to non-welded places, the burst pressure resistance value of the fluid inlet tube 5, fluid outlet tube 6, connection tubes 7, and supporting members 3 is configured in a range of 10 MPa to 15 MPa, thus avoiding the abnormality in which the fluid inlet tube 5, fluid outlet tube 6, connection tubes 7, and support members 3 leak refrigerant due to the bursting at the welds by the refrigerant pressure.

In some embodiment, the flexibility of the support members 3 is greater than the flexibility of any of the fluid inlet tube 5, the fluid outlet tube 6, or the connection tubes 7.

The support members 3 may be metallic materials. The fluid inlet tube 5, the fluid outlet tube 6, and the connection tubes 7 may be metallic materials.

The support members 3, the fluid inlet tube 5, the fluid outlet tube 6, and the connection tubes 7 may be independently selected from an aluminum tube or a copper tube.

It is to be understood that the support members 3 are bent such that the support members 3 are in close contact with the battery cell groups 2, so the support members 3 are arranged in a serpentine manner. Therefore, the support members 3 may be prepared with a more flexible material relative to the liquid fluid inlet tube 5, the liquid fluid outlet tube 6, and the connection tubes 7, to facilitate the bending of the support members 3 relative to the battery cell groups 2 to fit.

In some embodiment, each support member 3 has a thickness in the range of 2 mm to 5 mm along the thickness direction of the battery pack 8.

The thickness of the support member 3 may be any of 2 mm, 3 mm, 4 mm, or 5 mm.

It is to be understood that when the thickness of the support member 3 is less than 2 mm, the process is complicated and highly accurate due to the thin thickness of the support member 3, leading to an increase in cost. When the thickness of the support member 3 is greater than 5 mm, the thickness of the support member 3 is too large, leading to a lower utilization of the volume of space within the battery pack 8.

In some embodiments, multiple heating films 4 are connected in series with each other.

A positive wire harness and a negative wire harness are further provided. The positive wire harness is connected to a corresponding heating film 4, the negative wire harness is connected to a corresponding heating film 4, and a relay controls the opening and closing of the heating film 4.

It is to be understood that the multiple heating films 4 are connected in series, which can reduce the number of wire harnesses connected to the heating films 4, reducing the cost.

In some embodiments, a thermally conductive adhesive is further provided. The thermally conductive adhesive covers each of battery cells 21 in the battery cell group 2, and is thermally conductively connected to the corresponding heating film 4.

It is to be understood that one end of the thermally conductive adhesive is thermally connected to the heating film 4, and the other end of the thermally conductive adhesive covers the multiple battery cells 21, realizing heat exchange between the heating film 4 and the multiple battery cells 21, and enabling the heating film 4 to realize heat exchange with the multiple battery cells 21.

In some embodiments, the thickness of the thermally conductive adhesive ranges from 1 mm to 2 mm.

The thickness of the thermally conductive adhesive may be any of 1 mm, 1.2 mm, 1.5 mm, 1.8 mm, or 2 mm.

It is to be understood that when the thickness of the thermally conductive adhesive is less than 1 mm, the thermally conductive adhesive will be unbalanced resulting in a heat transfer deviation. When the thickness of the thermally conductive adhesive is greater than 2 mm, it will result in a localized over-thickness of the thermally conductive adhesive, which also results in an unbalanced heat conduction.

In some embodiments, the heating film 4 is attached to the circumferential surface of each battery cell 21, and the shape of the heating film 4 may be similar to the shape of the side of the battery cell 21.

In some embodiments, the at least one heating film 4 includes two heating films 4. The spacing between two adjacent heating films 4 along the axial direction of the battery cell 21 ranges from 63 mm to 73 mm.

The spacing between two adjacent heating films 4 may be any of 63 mm, 65 mm, 68 mm, 71 mm, or 73 mm.

Multiple heating films 4 may have the same dimensions.

The heating films 4 are centrally symmetrical.

Multiple heating films 4 are aligned such that their centerlines coincide in the row direction, the row direction corresponding to the axial direction of the battery cell 21.

Multiple heating films 4 are aligned such that their centerlines coincide in the column direction, the column direction corresponding to the arrangement direction of the battery cell row or the heating films 4.

The spacing between two heating films 4 refers to: the minimum distance between the two heating films 4.

The adjacent heating films 4 are arranged at equal intervals.

In the embodiments, the spacing between the two adjacent heating films 4 is made to satisfy the range from 63 mm to 73 mm, which improves the temperature conduction efficiency of heating while not affecting electrical safety.

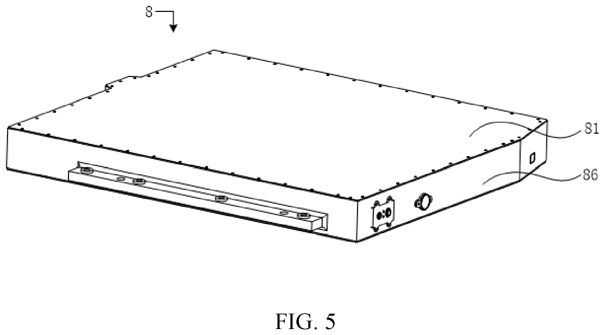

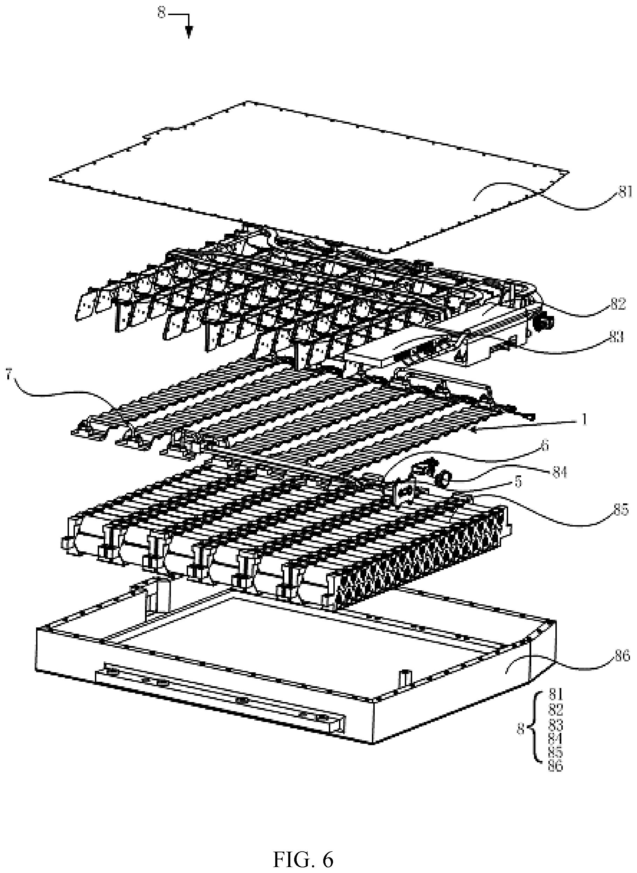

In a second aspect, referring to FIGS. 5 and 6, some embodiments of the present application provide a battery pack 8, which includes the thermal management device 1 according to any of the above embodiments.

The battery pack 8 further includes a top cover 81, a battery disconnect unit 82, a battery management module 83, a battery cell 21 module 84, a pressure sensor 85, the thermal management device 1, and a housing 86.

The top cover 81 and the housing 86 surround to define an accommodating cavity, and the battery disconnect unit 82, the battery management module 83, the battery cell 21 module 84, the pressure sensor 85, and the thermal management device 1 are provided in the accommodating cavity.

The battery pack 8 further includes one or more battery cell groups 2. Each battery cell group 2 includes at least one battery cell row. Each battery cell row includes multiple battery cells 21, the battery cells 21 being arranged in an array and electrically connected to each other.

In some embodiments, the battery pack 8 is further provided with a pressure relief port. The pressure relief port is provided such that each of the battery cells 21 can normally relieve pressure during thermal runaway.

The pressure sensor 85 is also provided, and the pressure sensor 85 is configured to detect the pressure change of the battery cells 21 when the battery cells 21 undergo thermal runaway, thus sending a warning signal for thermal runaway in a timely manner.

It is to be understood that the pressure relief port is configured such that each of the battery cells 21 can normally relieve pressure during thermal runaway, thereby avoiding abnormal damage to the battery cells 21 caused by the thermal runaway.

In the present application, the shape of the heating film 4 is adapted to the shape of the support member 3, and the heating film 4 is bonded to the support member 3. In this way, the contact between the heating film 4 and the support member 3 is more stable and tight.

## Claims

1. A thermal management device (1), applicable to a battery pack (8), the battery pack (8) comprising one or more battery cell groups (2), each battery cell group (2) comprising one or more battery cell rows, and each battery cell row comprising a plurality of battery cells (21), wherein the thermal management device (1) comprises:
one or more heating films (4);
wherein each heating film (4) is connected to and heats a respective one of the battery cell rows, and the heating film (4) is shaped to adapt to the plurality of battery cells (21) of the battery cell row.

2. The thermal management device (1) according to claim 1, wherein each battery cell (21) has a first surface and a second surface, and an area of the second surface is larger than an area of the first surface; and the heating film (4) is shaped to adapt to the second surface of the plurality of battery cells (21) of the battery cell row.

3. The thermal management device (1) according to claim 2, wherein each battery cell (21) is a cylindrical battery cell, and the second surface is an outer circumferential surface of the cylindrical battery cell.

4. The thermal management device (1) according to claim 3, further comprising one or more support members (3); wherein each support member (3) is configured to cool down the battery cell rows and support the heating films (4), the heating films (4) being shaped to adapt to the support member (3).

5. The thermal management device (1) according to claim 4, wherein the thermal management device (1) comprises two heating films (4); wherein each battery cell group (2) comprises two battery cell rows stacked along a thickness direction of the battery pack (8), and the two heating films (4) are respectively disposed on both sides of the support member (3) and are in close contact with the two battery cell rows respectively.

6. The thermal management device (1) according to claim 5, wherein each heating film (4) comprises a plurality of heating convex portions (41) and a plurality of heating concave portions (42), and each support member (3) comprises a plurality of direct-cooling convex portions (31) and a plurality of direct-cooling concave portions (32); the plurality of heating convex portions (41) of one of the two heating films (4) contact and are sandwiched between the plurality of direct-cooling convex portions (31) and one of the two battery cell rows; and the plurality of heating concave portions (42) of another of the two heating films (4) contact and are sandwiched between the plurality of direct-cooling concave portions (32) and another of the two battery cell rows.

7. The thermal management device (1) according to claim 6, wherein the two heating films (4) are bonded to the same support member (3).

8. The thermal management device (1) according to claim 6, wherein the plurality of heating convex portions (41) of one of the two heating films (4) are disposed opposite the plurality of heating convex portions (41) of another of the two heating films (4), and the plurality of heating concave portions (42) of the one of the two heating films (4) are disposed opposite the plurality of heating concave portions (42) of the other of the two heating films (4).

9. The thermal management device (1) according to claim 6, wherein the plurality of heating convex portions (41) and the plurality of heating concave portions (42) of each heating film (4) are arranged periodically.

10. The thermal management device (1) according to claim 6, wherein one of the two heating films (4) comprises a plurality of heating wires, and a distribution of the plurality of heating wires over at least one of the plurality of heating convex portions (41) is denser than a distribution of the plurality of heating wires over at least one of the plurality of heating concave portions (42).

11. The thermal management device (1) according to claim 6, wherein another of the two heating films (4) comprises a plurality of heating wires, and a distribution of the plurality of heating wires over at least one of the plurality of heating concave portions (42) is denser than a distribution of the plurality of heating wires over at least one of the plurality of heating convex portions (41).

12. The thermal management device (1) according to any one of claims 10 to 11, wherein a power of each heating wire ranges from 4 watts to 10 watts.

13. The thermal management device (1) according to any one of claims 1 to 12, further comprising a fluid inlet tube (5), a fluid outlet tube (6), and one or more connection tubes (7); wherein the fluid inlet tube (5) is connected to a respective one of the support members (3), the fluid outlet tube (6) is connected to a respective another of the support members (3), and two adjacent ones of the support members (3) are connected to a respective connection tube (7).

14. The thermal management device (1) according to claim 13, wherein the fluid inlet tube (5) is in communication with the one support member (3), the two adjacent ones of the support members (3) are in communication with each other via the respective connection tube (7), and the fluid outlet tube (6) is in communication with the other support member (3); and the fluid inlet tube (5) and the fluid outlet tube (6) are configured to be in communication with a circulation storage section, thereby forming a continuous flow loop.

15. The thermal management device (1) according to claim 13, wherein a diameter of the fluid inlet tube (5) is smaller than that of the fluid outlet tube (6).

16. The thermal management device (1) according to claim 13, wherein the fluid inlet tube (5), the fluid outlet tube (6), the one or more connection tubes (7), and the one or more support members (3) have a burst pressure resistance value ranging from 10 MPa to 15 MPa.

17. The thermal management device (1) according to claim 13, wherein a flexibility of the one or more support members (3) is greater than that of any of the fluid inlet tube (5), the fluid outlet tube (6), or the one or more connection tubes (7).

18. The thermal management device (1) according to any one of claims 1 to 17, wherein each support member (3) has a thickness ranging from 2 mm to 5 mm along a thickness direction of the battery pack (8).

19. The thermal management device (1) according to any one of claims 1 to 18, wherein each of the one or more support members (3) is a direct-cooling tube; and the direct-cooling tube is configured to utilize a refrigerant-based direct-cooling technology so that the refrigerant undergoes phase transitions via a condenser, compressor, and evaporator, thereby directly participating in cooling of the one or more battery cell groups (2).

20. A battery pack (8), comprising a thermal management device (1) according to any one of claims 1 to 19.
